(19) Europäisches Patentamt
European Patent Office
Office européen des brevets

(11) **EP 3 294 599 B1**

(12) **EUROPEAN PATENT SPECIFICATION**

(45) Date of publication and mention
of the grant of the patent:
**18.09.2024 Bulletin 2024/38**

(21) Application number: **16793085.8**

(22) Date of filing: **26.04.2016**

(51) International Patent Classification (IPC):
**B60W 30/165** (2020.01)   **G01S 13/93** (2020.01)
**G08G 1/00** (2006.01)   **G08G 1/16** (2006.01)
**B60W 30/16** (2020.01)   **G08G 1/0962** (2006.01)
**H04W 84/00** (2009.01)   **H04W 84/18** (2009.01)
**B60W 30/18** (2012.01)   **G01S 13/931** (2020.01)
**G05D 1/00** (2024.01)

(52) Cooperative Patent Classification (CPC):
**G08G 1/22; B60W 30/16; B60W 30/18163;
G01S 13/93; G01S 13/931; G05D 1/0293;
G08G 1/0962; H04W 84/005; H04W 84/18;**
B60W 2420/408; B60W 2510/0666; B60W 2530/10;
B60W 2552/15; B60W 2552/20; B60W 2552/30;

(Cont.)

(86) International application number:
**PCT/SE2016/050367**

(87) International publication number:
**WO 2016/182489 (17.11.2016 Gazette 2016/46)**

(54) **DEVICE, SYSTEM AND METHOD FOR A PLATOONING OPERATION**

VORRICHTUNG, SYSTEM UND VERFAHREN FÜR EINE OPERATION IN EINER KOLONNE

DISPOSITIF, SYSTÈME ET PROCÉDÉ PERMETTANT UNE OPÉRATION DE CIRCULATION EN PELOTON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.05.2015 SE 1550609**

(43) Date of publication of application:
**21.03.2018 Bulletin 2018/12**

(73) Proprietor: **Scania CV AB
151 87 Södertälje (SE)**

(72) Inventors:
• **ALAM, Assad
121 31 Enskededalen (SE)**
• **KJELLBERG, Joakim
126 77 Hägersten (SE)**
• **NORÉN, Christoffer
645 61 Stallarholmen (SE)**

(74) Representative: **Scania CV AB
Patents, GP 117kv
151 87 Södertälje (SE)**

(56) References cited:
**EP-A1- 1 785 744**   **EP-A2- 0 762 364**
**WO-A1-2015/047177**   **WO-A1-2015/047177**
**DE-A1- 102005 036 049**   **US-A1- 2010 021 011**
**US-A1- 2010 256 835**   **US-A1- 2010 256 835**
**US-A1- 2014 316 671**

• **HERMANN WINNER ET AL: "Adaptive Cruise
Control System Aspects and Development
Trends", SAE TRANSACTIONS, SOCIETY OF
AUTOMOTIVE ENGINEERS, INC.,
WARRENDALE, PA, US, vol. 105, no. 961010, 1
January 1996 (1996-01-01), pages 1412 - 1421,
XP002124577, ISSN: 0096-736X, DOI:
10.4271/961010**

(52) Cooperative Patent Classification (CPC): (Cont.)
B60W 2554/00; B60W 2554/801; B60W 2555/20;
B60W 2556/65; G01S 2013/9325; Y02T 10/40;
Y02T 10/84

**Description**

Technical field

The present disclosure relates to technology for platooning. In particular, the disclosure relates to a device, a system and a method for a platooning operation. The disclosure also relates to a vehicle comprising the device, a computer program and a computer program product.

Background

The European Union has set a goal of reducing greenhouse gases by 20% by 2020, and heavy vehicles currently account for 17% of the total $CO_2$ emissions in Europe. Thus, focus has been given on reducing fuel consumption of inter alia heavy vehicles to reach the goal and also to save on fuel costs. One way of reducing fuel consumption is to operate several vehicles in a chain formation, also known as platooning or operating vehicles in a convoy.

Platooning takes advantage of a reduced air drag by operating with small distances between vehicles in the platoon. Under normal circumstances the air drag of a vehicle is proportional to the square of the vehicle's velocity. This means that a reduction in speed from 90 km/h to 80 km/h reduces air drag by around 20 percent. Also, by staying close to a forward vehicle, an effect of reduced air drag can be obtained.

An adaptive cruise controller, ACC, enables both of the above mentioned techniques for reducing air drag and fuel consumption, namely:

- Allowing a lower cruising speed than the preset speed to reduce air drag when a forward vehicle is present.
- Staying closer to a forward vehicle may reduce air drag due to the aerodynamic effects.

Hence, by operating several vehicles in a chain formation, a substantial fuel reduction can be obtained through automated systems. A known problem for the commercially available ACC is that it maintains the target tracking over an unnecessarily long time span and road stretch, when the target vehicle is leaving the platoon, e.g. exiting via an off-ramp. For example, the target vehicle slowly changes path to the off-ramp and then reduces its speed. The follower vehicle with the active ACC then continues to track the target vehicle and hence commonly applies the brakes for a while - thereby consequently also reducing the speed. After a while, when the difference in heading between the target vehicle and the follower vehicle differs, the ACC detects that the preceding vehicle is no longer a target to be tracked and hence resumes the set speed of the cruise control (CC) until another target vehicle appears. This is experienced as highly irritating by the driver. It also increases the travelling time and brake wear as well as the fuel consumption.

From US8131444B2 a method for recognizing a turn maneuver and a driver assistance system for motor vehicles is known. The method includes using a digital map from a navigation system to verify whether there is a turn option, and based on dynamic data measured by a locating system calculating a turn probability for the preceding vehicle. The turn probability influence if the preceding vehicle is treated as a target vehicle or not for a subsequent vehicle.

From EP 0 762 364 A2 a method for determining whether a vehicle might leave a platoon is known. The method relies on inter vehicle communication where the leading vehicles control the following ones.

Summary

It is an object of the disclosure to provide a device and a method to efficiently operate a platoon. It is a further object of the disclosure to make a driver of a neighboring vehicle in a platoon aware of a possible departure of a vehicle in the platoon. It is a still further object of the disclosure to provide a driving strategy for the platoon, such that the platoon may be maintained when the vehicle that is likely to leave the platoon has left the platoon. It is another object of the disclosure to provide a method for recovering an originated gap between a subsequent vehicle and a new target vehicle in a cost effective way, when the vehicle in-between has left the platoon. These objects and others are at least to some extent achieved by the method and the device according to the independent claims, and by the embodiments according to the dependent claims.

According to a first aspect, the disclosure relates to a device for a platooning operation. The device comprises a leaving determination module configured to determine an indication that a vehicle in a platoon might leave the platoon and drive into an adjacent path based on data indication that the vehicle might leave the platoon, where the platoon includes at least one neighboring vehicle. Provided an indication has been determined, the device is configured to limit a field of view of a radar detector, arranged to the at least one neighboring vehicle and facing the vehicle, such that the adjacent path is not included in the field of view of the radar detector. The device is further configured to receive data from the radar detector and to determine from the data if the vehicle has departed from the current path and thus left the platoon. The device further comprises a driving strategy module configured to determine a driving strategy for the platoon, such that the platoon is maintained when the vehicle has left the platoon. The determination of driving strategy is based on a vehicle characteristic for at least one neighboring vehicle in the platoon and/or an environmental characteristic. The device is further configured to determine driving strategy data indicating the driving strategy.

By the proposed device a continuous fuel efficient conveyance of the platoon may be achieved. Driver acceptance for platooning may be increased, as the driver or drivers may become aware of if a vehicle may depart from the platoon and can make suitable actions for maintaining the platoon. If a follower vehicle unnecessarily has to slow down when it passes an off-ramp, the driver may get annoyed and turn off the platooning system, e.g. the ACC. Furthermore, fuel consumption does not have to be increased as there is no need to increase the velocity in order to maintain the travelling time because of a lowered velocity due to an off-ramp. Typically fuel loss occurs because of use of brakes due to frictional losses are made, as no matching of the speed of the decelerating preceding vehicle that has changed path is performed. Here, as there is no need for such braking, wear of brakes is reduced. In addition, the gap between platooning vehicles will be closed much more efficiently and thereby limiting the disturbance in the platoon when a vehicle chooses to leave the platoon formation.

According to one embodiment, the device is configured to send the driving strategy data to a communication device in the at least one neighboring vehicle in the platoon whereby the driving strategy is communicated to the at least one neighboring vehicle in the platoon.

According to one embodiment, the driving strategy module is configured to solve an optimization problem such that a fuel criterion becomes fulfilled and a time criterion for the at least one neighboring vehicle becomes fulfilled. According to one other embodiment, the driving strategy module is configured to solve the optimization problem with at least one constraint being any of the vehicle characteristic for the at least one neighboring vehicle and/or environmental characteristic. According to a further embodiment, the optimization problem includes to reduce a distance between a subsequent vehicle and a preceding vehicle of the vehicle such that the distance meets a platooning criterion for the distance.

According to one embodiment, the at least one neighboring vehicle characteristic is any of a vehicle mass, engine power or aerodynamic data.

According to one embodiment, the environmental characteristic is any of topographical data, road characteristic, road curvature, traffic data, infrastructure data or weather data.

According to one embodiment, the driving strategy module is configured to determine the driving strategy to include a recommended suitable action for the at least one neighboring vehicle. According to one further embodiment, the driving strategy module is configured to determine the driving strategy to include a determination of a position and/or a time for the recommended suitable action to take place.

According to one embodiment, the device is configured to generate a limit signal to the radar detector indicating a rotation degree for the radar detector such that the field of view of the radar detector does not include the adjacent path, whereupon the radar detector is arranged to rotate according to the rotation degree. According to another embodiment, the device is configured to generate a limit signal to the radar detector indicating a position of a hardware arranged to be positioned by the radar detector such that the field of view of the radar detector does not include the adjacent patch, whereupon the radar detector is arranged to position the hardware according to the position.

According to one embodiment, the device is configured to use a software detection algorithm on the data retrieved from the radar detector that removes the adjacent path or any objects in the adjacent path from the data.

According to one embodiment, the determination module is configured to determine the indication based on data received via wireless communication describing that the vehicle will leave the platoon, and/or from map data and position data wherein the determination module is configured to determine that an off-ramp or similar is approaching in an adjacent path.

According to a second aspect, the disclosure relates to a system for a platooning operation. The system comprises a leaving determination module configured to determine an indication that a vehicle in a platoon might leave the platoon and drive into an adjacent path based on data indicating that the vehicle might leave the platoon wherein the platoon includes at least one neighboring vehicle to the vehicle. The system further includes a radar detector, arranged to the at least one neighboring vehicle and facing the vehicle. The system also includes a device that provided that an indication has been determined by the leaving determination module, is configured to limit a field of view of the radar detector, such that the adjacent path is not included in the field of view of the radar detector. The device is further configured to receive data from the radar detector and to determine from the data if the vehicle has departed from the current path and thus left the platoon. The system further comprises a driving strategy module configured to determine a driving strategy for the platoon, such that the platoon is maintained when the vehicle has left the platoon. The system is configured to determine the driving strategy based on a vehicle characteristic for at least one neighboring vehicle and/or an environmental characteristic. The system is further configured to determine driving strategy data indicating the driving strategy. The system further comprises a communication device configured to receive the driving strategy data and to communicate the driving strategy to the at least one neighboring vehicle.

According to one embodiment, the communication device is arranged to inform a driver or drivers about the driving strategy visually via a display, via sound means and/or via tactile feedback means.

According to one embodiment, the device is configured to generate a limit signal to the radar detector indicating a rotation degree for the radar detector such that the field of view of the radar detector does not include the adjacent path, whereupon the radar detector is arranged to rotate according to the rotation degree. According to one embodiment, the device is configured to generate a limit signal to the radar detector indicating a position of a hardware arranged to be positioned by the radar detector such that the field of view of the radar detector does not include the adjacent patch, whereupon the radar detector is arranged to position the hardware according to the position.

According to one embodiment, the device is configured to use a software detection algorithm on the data retrieved from the radar detector that removes the adjacent path or any objects in the adjacent path from the data.

According to one embodiment, the system is configured to receive data indication that the vehicle might leave the platoon from the vehicle that is determined to leave the platoon via wireless communication.

According to a third aspect, the disclosure relates to a method for a platooning operation. The method comprises determining an indication that a vehicle in a platoon might leave the platoon based on data indicating that the vehicle might leave the platoon, wherein the platoon includes at least one neighboring vehicle to the vehicle. Provided an indication has been determined, the method includes limiting a field of view of a radar detector arranged to the at least one neighboring vehicle and facing the vehicle, such that the adjacent path is not included in the field of view of the radar detector, and determining from data received from the radar detector if the vehicle has departed from the current path and thus left the platoon. The method further comprises determining a driving strategy for the platoon, such that the platoon is maintained when the vehicle has left the platoon. The determination of strategy is based on a vehicle characteristic for at least one neighboring vehicle and/or an environmental characteristic.

According to one embodiment, the method comprising communicating the driving strategy to the at least one neighboring vehicle.

According to one embodiment, wherein determining the driving strategy comprises solving an optimization problem such that a fuel criterion becomes fulfilled and a time criterion for the at least one neighboring vehicle becomes fulfilled.

According to one embodiment, the method comprises solving the optimization problem with at least one constraints being any of the vehicle characteristic for the at least one neighboring vehicle and/or environmental characteristic.

According to one embodiment, the optimization problem includes to reduce a distance between a subsequent vehicle and preceding vehicle to the vehicle such that the distance meets a platooning criterion for the distance.

According to one embodiment, the driving strategy includes a recommended suitable action for the at least one neighboring vehicle. According to one further embodiment, the driving strategy includes a determination of a position and/or a time for the recommended suitable action to take place.

According to one embodiment, the driving strategy is informed to a driver or drivers visually, via sound and/or via tactile feedback.

According to a fourth aspect, the disclosure relates to a computer program P. The computer program P comprises a computer program code to cause a device, or a computer connected to the device, to perform the method as described herein.

According to a fifth aspect, the disclosure relates to a computer program product comprising a computer program code stored on a computer-readable medium configured to perform the method as described herein, when the computer program code is executed by a device or by a computer connected to the device.

Brief description of the drawings

Fig. 1 shows a platoon with a vehicle that is to leave the platoon.
Fig. 2 shows a system with a device according to one embodiment of the disclosure.
Figs. 3A-3D show a plurality of examples of visualizations of a driving strategy for a subsequent vehicle to the vehicle that is to leave the platoon.
Fig. 4 illustrates a flowchart of a method according to one embodiment of the disclosure.

Detailed description

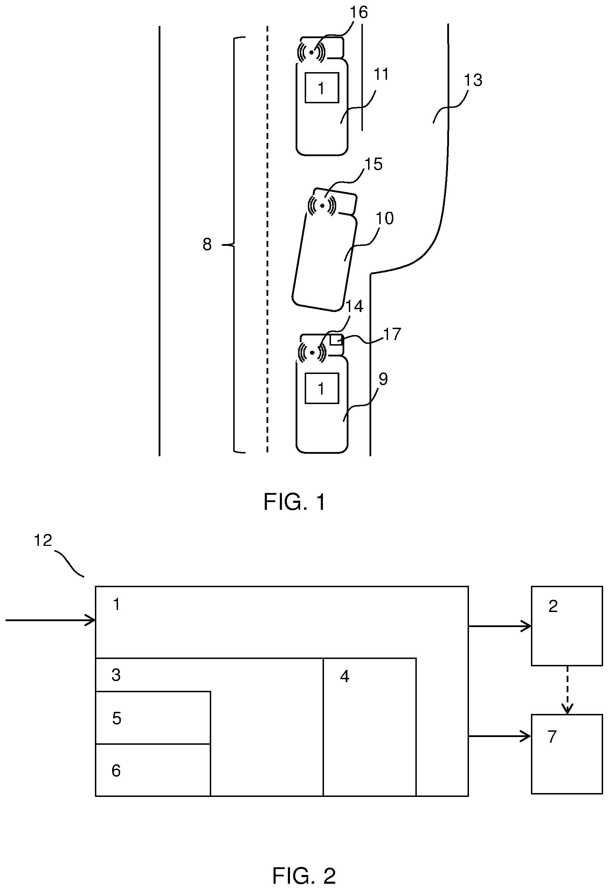

Fig. 1 shows a platoon 8 with three vehicles 9, 10, 11, one leader vehicle 11, one vehicle 10 in the middle, and last one vehicle 9 in the platoon 8. The vehicles 9, 10, 11 are in the platoon 8 conveyed with small distances between each other, to take advantage of the then reduced air-resistance. The platooning may be performed by means of automated platooning systems, such as ACC (Automatic Cruise Control). Each vehicle in the platoon 8 then individually maintains a small distance to the closest preceding vehicle, and adapts its velocity such that the distance can be maintained. The small distances are determined e.g. by the velocity of the vehicles, vehicle characteristics, safety issues, weather etc. A closest preceding vehicle may also be referred to as a target vehicle for the subsequent vehicle in the platoon 8. The platooning may instead be performed with cooperate control e.g. from the leader vehicle in the platoon 8. The platooning may then also include steering control of the vehicles 9, 10, 11 in the platoon 8.

Each of the vehicles 9, 10, 11 is preferably arranged with a separate radar device 17. Here, only one radar device 17 is shown arranged to the last vehicle 9. If the radar devices are facing forward, the radar devices enable detection of a distance between the own vehicle and the vehicle in front, e.g. the intermediate distance between two neighboring vehicles, and thus for ACC. Each of the vehicles 9, 10, 11 may also be arranged with a rear-facing radar device (not shown) to enable detection of the subsequent vehicle, and thus the distance to the subsequent vehicle. This distance is also referred to as the intermediate distance between neighboring vehicles.

Each vehicle 9, 10, 11 in the platoon 8 is arranged with a communication device for wireless communication 14, 15, 16, illustrated in the Fig. 1 by antennas. The vehicles 9, 10, 11 may thus communicate wirelessly between each other, wirelessly with each other via infrastructure such as a road side unit or node (not shown), or wirelessly between a vehicle and infrastructure, such as a remote platooning coordination system or fleet management system. Wireless communication between vehicles may be referred to as Vehicle-to-Vehicle (V2V) communication. Wireless communication between a vehicle and infrastructure may be referred to as Vehicle-to-Infrastructure (V2I) communication. The wireless communication may also be conducted via mobile communication servers, via an application in a communication unit or via a server. Wireless communication may be performed by means of a wireless communication system with WiFi, Bluetooth, IR (Infra Red) communication or a phone network such as GPRS (General Packet Radio Service), 3G, 4G, EDGE (Enhanced Data GSM Environment) etc.

The vehicles 9, 10, 11 are further each arranged with a positioning unit (not shown) such that the position of each vehicle 9, 10, 11 may be determined. The positioning unit may be configured to receive signals from a global positioning system such as GNSS (Global Navigation Satellite System), for example GPS (Global Positioning System), GLONASS, Galileo or Compass. Alternatively the positioning unit may be configured to receive signals from for example one or several distance detectors in the vehicle 9, 10, 11 that measure relative distances to for example a road side unit, nearby vehicles or similar with a known position. Based on the relative distance or distances the positioning unit may determine the position of the vehicle 9, 10, 11. A detector in the vehicle 9, 10, 11, may also be configured to detect a signature in for example a road side unit, whereby the signature represents a certain position. The positioning unit may then be configured to determine its own position via detection of the signature. The positioning unit may instead be configured to determine the signal strength in one or a plurality of signals from a base station or road side unit with known position, and thereby determine the position of the vehicle 9, 10, 11 by using triangulation. Some of above mentioned technologies may of course be combined to ensure a correct position determination of the vehicle 9, 10, 11.

The vehicle 9, 10, 11 may communicate internally between its units, devices, sensors, detectors etc. via a communication bus, for example a CAN-bus (Controller Area Network) which uses a message based protocol. Examples of other communication protocols that may be used are TTP (Time-Triggered Protocol), Flexray, etc. In that way signals and data described herein may be exchanged between different units, devices, sensors and/or detectors in the vehicle 9, 10, 11. Signals and data may instead be transferred wirelessly between the different units, devices, sensors and/or detectors.

As illustrated in Fig. 1, the vehicles 9, 10, 11 are travelling along a road and are parallel to an off-ramp 13 of the road. The vehicle 10 in the middle of the platoon 8 is to leave the platoon 8 and drive off the road at the off-ramp 13, as it has started to turn at the off-ramp 13. The subsequent vehicle 9 to the vehicle 10 in the middle of the platoon 8 is arranged with a device 1 that will now be explained with reference to Fig. 2. The leader vehicle 11 may also be arranged with a device 1, as illustrated in the Fig. 1. The road the platoon 8 is travelling on is referred to as the current path, and the off-ramp 13 is an adjacent path to the current path. The current path may be a road or a lane the platoon 8 is travelling on. An adjacent path may be e.g. an adjacent road, an adjacent lane or an adjacent off-ramp.

In Fig. 2 the device 1 for a platooning operation is illustrated. The device 1 is here explained as being arranged in the subsequent vehicle 9, also referred to as the last vehicle, but a similar device 1 may be arranged in any of the other vehicles in the platoon 8. A device 1 could also be arranged in an off-board system (not shown). The device 1 may be part of a system 12 for a platooning operation. The device 1 further includes a processing unit 4 and a memory unit 3. The processing unit 4 may be made up of one or more Central Processing Units (CPU). The memory unit 3 may be made up of one or more memory units. A memory unit may include a volatile and/or a non-volatile memory, such as a flash memory or Random Access Memory (RAM). The memory unit 3 comprises a computer program P including a computer program code to cause the device 1, or a computer connected to the device 1, to perform any of the method steps that will be described in the following. The device 1 may be an Electronic Control Unit (ECU).

The computer program P in the memory unit 3 comprises a leaving determination module 5 that is configured to determine an indication that a vehicle 10 in the platoon 8 might leave the platoon 8 and drive into an adjacent path based on data indicating that the vehicle 10 is to leave the platoon 8, when the computer program P is run on the processing unit 4. The device 1 may be configured to receive data indicating that the vehicle 10 might leave the platoon 8 from various sources. For example may the preceding vehicle 10 send data indicating that the preceding vehicle 10 is to leave the platoon 8 via wireless communication to the subsequent vehicle 9. The data indicating that the vehicle 10 is to leave the platoon 8 may include e.g. the position of the preceding vehicle 10 and what off-ramp the preceding vehicle 10 will take. The preceding vehicle 10 may also indicate with its flashers or sound means that it intends to turn. The subsequent vehicle 9 may include a forward facing detector 17 such as a radar detector or a camera detector that monitors the behavior of the preceding vehicle 10 and is configured to send detected data to the device 1. The forward facing detector 17 is according to one embodiment a radar detector 17 which field of view can be limited. The radar detector 17 may be a rotatable radar that is arrange to be rotated such that its field of view becomes limited. The rotatable radar detector 17 may have a range of about 50-200 m, and its field of view spans a circle segment with a certain angle. The radar detector 17 may be controlled to vary its field of view by rotating itself a certain rotation degree. The radar detector 17 may instead or also limit its field of view by positioning a hardware such as a flap or plate physically in the field of view of the radar detector 17. The radar detector 17 is then arranged to control the position of the hardware.

Based on the received detected data the leaving determination module may determine an indication if the preceding vehicle 10 might leave the platoon 8. Further, if the vehicle 10 turns at a certain position and according to the planned route of the platoon 8 the platoon 8 should not turn at this position, then it may be decided that the preceding vehicle 10 might leave the platoon 8. The device 1 may use digital map data with position information of the current road, and route information, in order to determine if the preceding vehicle 10 is departing from the planned route. It may also be known in beforehand from route data of the preceding vehicle 10 that the preceding vehicle 10 will leave the platoon 8 at a certain off-ramp. This information may be sent to the device 1 from a platooning coordination system, or from the preceding vehicle 10 itself. By using digital map data, the device 1 may keep track on when the preceding vehicle 10 should depart from the platoon 8.

In a similar way may a device 1 in the leader vehicle 11 keep track on if the subsequent vehicle 10 is to leave the platoon 8. The device 1 in the leader vehicle 11 may receive wireless data from the subsequent vehicle 10, and/or monitor the behavior of the subsequent vehicle 10 via detectors in the leader vehicle 11, and from detected data determine that the subsequent vehicle 10 is to leave the platoon 8. For simplicity it is in the following description assumed that the device 1 is arranged in the last subsequent vehicle 9. Instead, the device 1 may be arranged in the leader vehicle 11.

Thus, the leaving determination module may be configured to determine the indication based on data received via wireless communication describing that the vehicle 10 will leave the platoon 8, and/or from digital map data and position data of the vehicles, e.g. from the vehicle where the device 1 resides, and thus to determine that an off-ramp or similar is approaching in an adjacent path. If an indication has been determined that the vehicle 10 might leave the platoon 8, the device 1 is configured to limit a field of view of the radar detector 17. The device 1 is configured to generate a limit signal to the radar detector 17 indicating a rotation degree for the radar detector 17 such that the field of view of the radar detector 17 does not include the adjacent path. By rotating the rotatable radar detector 17, the field of view of the radar detector 17 can be made limited such that the adjacent path 13 to the current path is not included in the field of view of the radar detector 17. If the radar detector 17 is rotated in such way such that it does not include e.g. an off-ramp, it can much faster detect if the preceding vehicle 10 (or subsequent vehicle 10 if the radar detector 17 is a rear-facing detector in the preceding vehicle) has changed path from the current path to the adjacent path i.e. the off-ramp 13, as the vehicle 10 will become out of sight faster. Alternatively, the field of view of the radar detectors 17 can be blocked or limited with suitable hardware, e.g. an automated flap or plate. The device 1 is then configured to generate a limit signal to the radar detector 17 such that the hardware, e.g. the automated flap, is set in a position such that the field of view of the radar detector 17 is limited such that it does not include the adjacent path, e.g. an off-ramp. Another alternative is to block or limit the field of view of the radar detector 17 by using a software based detection algorithm that disregards objects in a certain area of the field of view of the radar, e.g. the area of the off-ramp when approaching an off-ramp. The device 1 is then configured to receive data from the radar detector 17, and to limit the data such that data of the adjacent path e.g. the off-ramp is disregarded.

According to one embodiment, the device 1 is configured to use data of the road curvature ahead to determine an appropriate limit signal to the radar detector 17, or to make a correct limitation of the retrieved data from the radar detector 17. For example, if the road turns slightly towards the right and an off-ramp is present (to the right as well), it will also be taken into consideration. Thus, the field of view will be adjusted accordingly.

The device 1 is further configured to receive data from the limited field of view from the radar detector 17, and to determine from the data if the vehicle 10 has departed from the current path, i.e. changed path, and thus has left the platoon 8.

If the preceding vehicle 10 is leaving the platoon 8, the preceding vehicle 10 should not be the target vehicle for the subsequent vehicle 9 anymore. The device 1 may plan how to continue to convey the platoon 8 such that it is efficiently maintained. For this purpose, the computer program P in the memory unit 3 comprises a driving strategy module 6 configured to determine a driving strategy for the platoon 8; e.g. a driving strategy for a neighboring vehicle 9, 11 to the vehicle 10 in the platoon 8 that might leave the platoon 8, when the computer program P is run on the processing unit 4. The driving strategy should be determined such that the platoon 8 can be maintained when the vehicle 10 determined to might leave the platoon 8 has left the platoon 8. The determination of driving strategy is based on a vehicle characteristic for the at least one neighboring vehicle 9, 11 in the platoon 8 and/or an environmental characteristic. A neighboring vehicle characteristic may be vehicle mass of the neighboring vehicle 9, 11, engine power of the neighboring vehicle 9, 11 or aerodynamic data of the neighboring vehicle 9, 11. The environmental characteristics may be any of topographical data, road characteristic such as bridge, road curvature, traffic data such as a coming queue, infrastructure data such as speed signs, traffic lights, stops, roundabouts etc, and weather data.

A neighboring vehicle to a vehicle is thus a closest preceding vehicle to the vehicle, or a closest subsequent vehicle to the vehicle. A neighboring vehicle to the middle vehicle 10 is thus the preceding vehicle 11, thus the leader vehicle 11, or the subsequent vehicle 9, thus the last vehicle 9.

The driving strategy module 6 may be configured to solve an optimization problem such that a fuel criterion becomes fulfilled and a time criterion for the at least one neighboring vehicle 9, 11 becomes fulfilled. The fuel criterion may be valid for one or several neighboring vehicles 9, 11 in isolation, or for the whole platoon 8. The driving strategy module 6 may be configured to solve the optimization problem with at least one constraint being any of the vehicle characteristic for any of the neighboring vehicles 9, 11 and/or environmental characteristic.

The optimization problem may be formulated as a cost function:

$$J = \min f(x, u) \qquad\qquad (\text{Eq. } 1)$$

where $f(x, u)$ is the objective function to be minimized over the variable $x$, with respect to $u$. The object may be to adjust the driving force of the subsequent vehicle 9 and/or a new target vehicle 11 in order to reduce a distance between the subsequent vehicle 9 and a preceding vehicle 11 to the vehicle 10 such that the distance meets a platooning criterion for the distance, meanwhile the fuel consumption of the subsequent vehicle 9, the preceding vehicle 11 to the vehicle 10 and/or the total platoon 8 is minimized and the allowed time for the assignment of the subsequent vehicle 9 and/or preceding vehicle 11 to the vehicle 10 is not exceeded, based on the one or several constraints, e.g. road topology. The preceding vehicle 11 to the vehicle 10 may be referred to as a new target vehicle 11 for the vehicle 10.

The platooning criterion for the distance between the subsequent vehicle 9 and/or the preceding vehicle 11 to the vehicle 10 may be dependent on the velocity of the vehicles, safety restrictions, characteristics of vehicles etc.

The driving strategy module 6 may further be configured to determine the driving strategy to include a recommended suitable action for the subsequent vehicle 9 and/or the preceding vehicle 11 to the vehicle 10. The suitable action may include an adjustment of the driving force e.g. a velocity change such as a velocity increase or decrease, a new target velocity, acceleration or deceleration, or a steering maneuverer for the subsequent vehicle 9 and/or the preceding vehicle 11 to the vehicle 10. The driving strategy module 6 may also be configured to determine the driving strategy to include a determination of a position and/or a time for the recommended suitable action to take place for the subsequent vehicle 9 and/or the preceding vehicle 11 to the vehicle 10. This is based on that it is known where the preceding vehicle 10 is departing or will depart from the road the platoon 8 is travelling on. For example, a driving strategy may include instructions that the subsequent vehicle 9 should increase its velocity to x [km/h] after t [s] or y[m]. Another driving strategy may include instructions that the subsequent vehicle 9 should decrease its velocity to z [km/h] and the preceding vehicle 11 to the vehicle 10 should decrease its velocity to w [km/h].

The driving strategy module 6 may thus be configured to determine the driving strategy to include a recommended suitable action for any preceding vehicle 11 to the vehicle 10, e.g. a new target vehicle 11 of the subsequent vehicle 9. Also in this case, the suitable action may include an adjustment of the driving force e.g. a velocity change such as a velocity increase or decrease, a new target velocity, acceleration or deceleration, or a steering maneuverer of the preceding vehicle 11 to the vehicle 10. The driving strategy module 6 may also be configured to determine the driving strategy to include a determination of a position and/or a time for the recommended suitable action to take place for the preceding vehicle 11 to the vehicle 10. This is based on that it is known where the preceding vehicle 10 is departing or will depart from the road the platoon 8 is travelling on.

The driving strategy module 6 is configured to determine driving strategy data indicating the driving strategy. The device 1 is further configured to send the driving strategy data to a communication device 2 in the at least one neighboring vehicle 9, 11, i.e. the subsequent vehicle 9 and/or the preceding vehicle 11 to the vehicle 10, whereby the driving strategy is communicated to the at least one neighboring vehicle 9, 11.

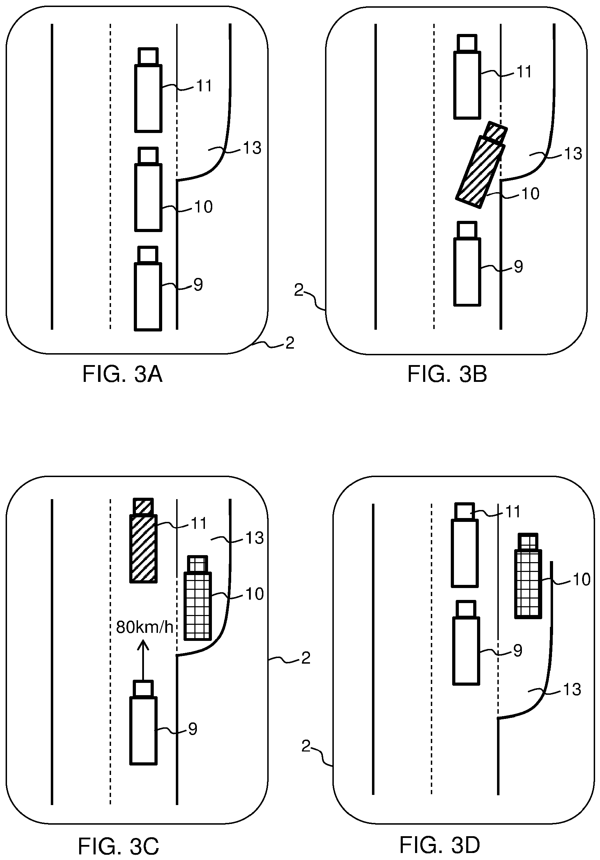

The communication device 2 may any kind of Human-Machine (HMI) with hardware and/or software interfaces. For example may the driving strategy, or at least part of the driving strategy, be visualized on a display 2 in the neighboring vehicle 9, 11 as illustrated in Figs. 3A-3D. The display 2 may be a computer display arranged in the dashboard, a HUD (Head-up display) or a display in a hand-held device. Other kinds of communication devices 2 may be arranged with sound means e.g. a load speaker or tactile feedback means, etc.

The driving strategy may include various instructions depending on the constraints, e.g. the road topography. For example, if a downhill is approaching, the driving strategy may comprise instructions to the subsequent vehicle 9 to wait to catch up with the preceding vehicle 11 to the vehicle 10 until the downhill. In the downhill, the cost for reducing the distance is less than on a straight road, as the subsequent vehicle 9 anyway will increase its velocity in the downhill due to its weight.

If an uphill is approaching, the driving strategy may comprise instructions to the preceding vehicle 11 to the vehicle 10 to not increase its velocity before the uphill. The subsequent vehicle 9 then will more easily catch up with the preceding vehicle 11 to the vehicle 10. If there is a downhill after the uphill, the driving strategy may include instructions to the subsequent vehicle 9 to not increase the velocity in the uphill, as there will be a downhill in which the velocity of the subsequent vehicle 9 is increased.

If the weather conditions are bad, e.g. the road is icy, the driving strategy may include instructions to the subsequent vehicle 9 to not catch up with the preceding vehicle 11 to the vehicle 10 as it might compromise the safety of the subsequent vehicle 9 and/or the preceding vehicle 11 to the vehicle 10.

The driving strategy data may comprise one or several tips to the driver or drivers that are communicated to the driver or drivers via the communication device 2 or devices 2, if several vehicles.

If there is no further vehicle in the platoon 8 in front of the departing vehicle 10, then the subsequent vehicle 9 should become the target vehicle, or leader vehicle, itself. The driving strategy may then include information to the driver of the subsequent vehicle 9 that this vehicle 9 now will become the leader vehicle in the platoon 8. If the subsequent vehicle 9 is the only vehicle left in the platoon 8, then the subsequent vehicle 9 may start looking for other vehicles to platoon with.

The driving strategy data may also be communicated to a control unit 7 in the subsequent vehicle 9, whereby the control unit 7 is arrange to automatically control the subsequent vehicle 9 according to the determined strategy.

If the driving strategy includes a suitable action for the preceding vehicle 11 to the vehicle 10, then the driving strategy data may be transmitted via wireless communication to the preceding vehicle 11 to the vehicle 10. The driving strategy data may be informed to the driver of the preceding vehicle 11 to the vehicle 10 via a suitable HMI (not shown). The driving strategy data may also be communicated to a control unit (not shown) in the preceding vehicle 11 to the vehicle 10, whereby the control unit may be arrange to automatically control the preceding vehicle 11 to the vehicle 10 according to the determined strategy.

In Figs. 3A to 3D a plurality of screen shots of a visualized exemplified driving strategy for the platoon 8 in Fig. 1 are shown that will be explained in the following with reference to these figures. The real-time platoon behavior may be continuously shown for the drivers of the vehicles in the platoon 8 by suitable HMIs. The middle vehicle 10 has indicated via wireless communication to the device 1 in the subsequent vehicle 9 that it intends to depart from the platoon 8 at the next off-ramp 13 of the road the platoon 8 is travelling on. Based on the wirelessly communicated data the leaving determination module 5 determines that it is likely that the preceding vehicle 10 leaves the platoon 8 at the next off-ramp 13. By using digital map data where the next off-ramp 13 is indicated and position data of the subsequent vehicle 9, the device 1 theoretically can determine where the preceding vehicle 10 no more should be used as a target vehicle for the subsequent vehicle 9. The members of a platoon 8 are normally aware of the other members of the platoon 8, such that the subsequent vehicle 9 is aware of the leader vehicle 11 in the platoon 8. The device 1 may thus continuously retrieve information about the leader vehicle 11, such as position, velocity, route heading and ID, e.g. via wireless communication. The driving strategy module 6 now determines a driving strategy for the platoon 8 such that the subsequent vehicle 9 may use the leader vehicle 11 as the new target vehicle. The distance between the subsequent vehicle 9 and the new target vehicle 11 should thus be reduced such that they can platoon with each other. The driving strategy module 6 determines that the subsequent vehicle 9 should increase its velocity to 80 km/h when the preceding middle vehicle 10 has left the platoon 8. The driving strategy is illustrated for the driver of the subsequent vehicle 9, as illustrated in Figs. 3A-3D. In the figures only screen-shots are shown, but it is understood that the strategy may be illustrated as a video stream, where the strategy is continuously illustrated. In Fig. 3A a screen shot of the platoon 8 is shown just when the leader vehicle 11 in the platoon 8 has passed the off-ramp 13. After the leader vehicle 11 there is the middle vehicle 10 in the platoon 8, and thereafter the last vehicle 9. The vehicles 9, 10, 11 here have the same color, e.g. white, to illustrate that they are all participants of the platoon 8. In this phase, the field of view of the radar detector 17 may be limited in order to faster track when the middle vehicle 10 will depart from the current path. In Fig. 3B it is shown where the middle vehicle 10, thus the preceding vehicle 10 to the last vehicle 9, is starting to turn into the off-ramp 13. When it starts to turn, it changes its structure as illustrated in the figure. Instead, it may change color. This indicates that the preceding vehicle 10 should still be tracked, but not for so very long. In Fig. 3C, the preceding vehicle 10 has completely driven into the off-ramp 13, and changes structure again. Instead, it may change color. It is suggested to the driver of the subsequent vehicle 9 to increase the velocity of the subsequent vehicle 9 to 80 km/h to catch up with the leader vehicle 11, such that the leader vehicle 11 becomes the new target vehicle for the subsequent vehicle 9. This is suggested to the driver by displaying "80 km/h" on the display, and an arrow from the own vehicle, the subsequent vehicle 9, pointing in the direction of the leader vehicle 11. Further, the leader vehicle 11 changes its structure to the structure the previous tracked vehicle 10 had before it completely was driven into the off-ramp 13, as illustrated in the figure. Instead, it may change color. Thereby the subsequent vehicle 9 will know which vehicle to track. The radar detector 17 with its limited field of view is used to track when the vehicle 10 has departed from the current path to securely confirm that the vehicle 10 actually has departed from the current path before any new platoon formation starts. In Fig. 3D it is illustrated when the strategy has been followed and the subsequent vehicle 9 has catched up with the leader vehicle 11. The driver is now aware of what may happen, and knows the best driving strategy to maintain the platoon 8 efficiently. The driver may now decide to follow the strategy by giving an input to the system 12. Instead, the driving strategy may be automatically followed by any automatic control unit 7 in the vehicle 9. The preceding vehicle 10 may send a wireless acknowledgement to the subsequent vehicle 9 that it has left the platoon 8 and is now totally on the off-ramp 13. The driver or any automatic control unit 7 may await such an acknowledgement before it follows the suggested driving strategy. The acknowledgement may be verified by data from any forward facing detector of the vehicle 9, such that it can be ascertained that the preceding vehicle 10 really has totally departed from the path of the road the platoon 8 is conveyed.

The preceding vehicle 10 may also send the wireless acknowledgement to the preceding vehicle 11 that it has left the platoon 8 and is now totally on the off-ramp 13. The driver or any automatic control unit 7 of the preceding vehicle 11 may await such an acknowledgement before it follows a suggested driving strategy. The acknowledgement may be verified by data from any rearward facing detector of the vehicle 11, such that it can be ascertained that the subsequent vehicle 10 really has totally departed from the path of the road the platoon 8 is conveyed.

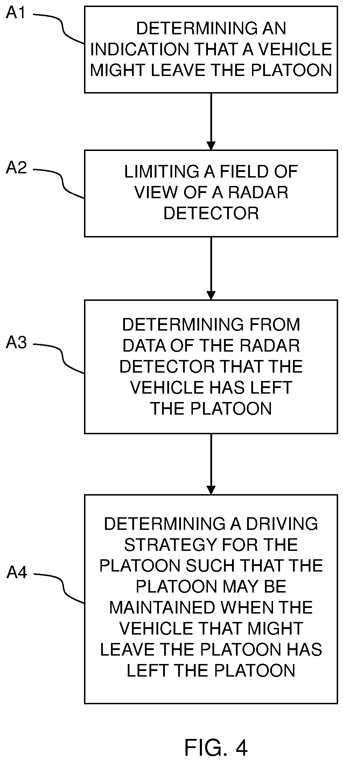

The disclosure also relates to a method for the platooning operation, which will now be described with reference to the flowchart in Fig. 4. The method may be implemented as program code and saved in the memory unit 3 in the device 1 (Fig. 2). The method may thus be implemented with the above described hardware of the device 1 in the vehicle 10. The method comprises: Determining an indication that a vehicle 10 in a platoon 8 might leave the platoon 8 and drive into an adjacent path based on data indicating that the vehicle 10 might leave the platoon 8 (A1). This determination may be done by the leaving determination module 5 in the device 1 (Fig. 2). The method further includes that provided an indication has been determined, limiting a field of view of a radar detector 17, arranged to the at least one neighboring vehicle 9, 11 and facing the vehicle 10, such that the adjacent path is not included in the field of view of the radar detector 17 (A2). In order to not include the adjacent path in the field of view, the step A2 may include to generate a limit signal to the radar detector 17 indicating a rotation degree for the radar detector 17 such that the field of view of the radar detector 17 does not include the adjacent path, whereupon the radar detector 17 is rotated according to the rotation degree. The method may alternatively include generating a limit signal to the radar detector 17 indicating a position of a hardware arranged to be positioned by the radar detector 17 such that the field of view of the radar detector 17 does not include the adjacent patch, whereupon the radar detector 17 positions the hardware according to the position. In a still further alternative, the method includes to use a software detection algorithm on the data retrieved from the radar detector 17 that removes the adjacent path or any objects in the adjacent path from the data. The method further includes determining from the data received from the radar detector if the vehicle 10 has departed from the current path and thus left the platoon 8 (A3). This data may thus first go through a detection algorithm that removes the adjacent path or any objects in the adjacent path from the data, before it is determined if the vehicle 10 has departed from the current path. The steps A2 and A3 may be made by the device 1 (Fig. 2). The method further includes determining a driving strategy for the platoon 8 that is to leave the platoon 8, such that the platoon 8 is maintained when the vehicle 10 determined to leave the platoon 8 has left the platoon 8. The determination of a strategy is based on a vehicle characteristic for at least one neighboring vehicle 9, 11 in the platoon 8 and/or an environmental characteristic (A4). This determination of a driving strategy may be done by the driving strategy module 6 in the device 1 (Fig. 2). A neighboring vehicle characteristic may be any of a vehicle mass, engine power or aerodynamic data of any of the closest neighboring vehicles 9, 11 to the vehicle 10 that is to leave the platoon 8. An environmental characteristic may be any of topographical data, road characteristic, road curvature, traffic data, environmental data, and weather data. The determination of the driving strategy may comprise solving an optimization problem, see e.g. Eq 1, such that a fuel criterion becomes fulfilled and a time criterion for the at least one neighboring vehicle 9, 11 becomes fulfilled. The optimization problem may include reducing a distance between the subsequent vehicle 9 and a preceding vehicle 11 to the vehicle 10 such that the distance meets a platooning criterion for the distance. The method may further comprise solving the optimization problem with at least one constraints being any of the vehicle characteristic for the at least one neighboring vehicle 9, 11 and/or environmental characteristic.

The method further comprises communicating the driving strategy to the at least one neighboring vehicle 9, 11. The driving strategy may be communicated e.g. via any of the herein described communication devices 2. Thus, the driving strategy may be informed to the driver or drivers visually, via sound means and/or via tactile feedback. The driving strategy may include a recommended suitable action for the subsequent vehicle. The driving strategy may also include a determination of a position and/or a time for the recommended suitable action to take place.

Further, the driving strategy may include a recommended suitable action for the preceding vehicle 11 to the vehicle 10.

The present invention is not limited to the above-described preferred embodiments. Various alternatives, modifications and equivalents may be used. Therefore, the above embodiments should not be taken as limiting the scope

**EP 3 294 599 B1**

of the invention, which is defined by the claims.

**Claims**

1.  A device (1) for a platooning operation comprising a leaving determination module (5) configured to determine an indication that a certain vehicle (10) in a platoon (8) might leave the platoon (8) and drive into an adjacent path based on data indicating that the certain vehicle (10) might leave the platoon (8), wherein the platoon (8) includes at least one neighboring vehicle (9, 11) to the certain vehicle (10) wherein provided an indication has been determined, the device (1) is configured to limit a field of view of a radar detector (17), arranged on the at least one neighboring vehicle (9, 11) and facing the certain vehicle (10), such that the adjacent path is not included in the field of view of the radar detector (17), the device (1) is further configured to receive data from the radar detector (17) and to determine from the data if the certain vehicle (10) has departed from the current path and thus left the platoon (8), the device (1) further comprises a driving strategy module (6) configured to determine a driving strategy for the platoon (8), such that the platoon (8) is maintained when the certain vehicle (10) has left the platoon (8), wherein the determination of driving strategy is based on a vehicle characteristic for at least one neighboring vehicle (9, 11) in the platoon (8) and/or an environmental characteristic, and to determine driving strategy data indicating the driving strategy.

2.  The device (1) according to claim 1, configured to send the driving strategy data to a communication device (2) in the at least one neighboring vehicle (9, 11) whereby the driving strategy is communicated to the at least one neighboring vehicle (9, 11).

3.  The device (1) according to claim 1 or 2, wherein the driving strategy module (6) is configured to solve an optimization problem such that a fuel criterion becomes fulfilled and a time criterion for the at least one neighboring vehicle (9, 11) becomes fulfilled.

4.  The device (1) according to claim 3, wherein the driving strategy module (6) is configured to solve the optimization problem with at least one constraint being any of the vehicle characteristic for the neighboring vehicle (9, 11) and/or environmental characteristic.

5.  The device (1) according to claim 3 or 4, wherein the optimization problem includes to reduce a distance between a subsequent vehicle (9) and a preceding vehicle of the certain vehicle (10) such that the distance meets a platooning criterion for the distance.

6.  The device (1) according to any of the preceding claims, wherein the neighboring vehicle characteristic is any of a vehicle mass, engine power or aerodynamic data.

7.  The device (1) according to any of the preceding claims, wherein the environmental characteristic is any of topographical data, road characteristic, road curvature, traffic data, infrastructure data, weather data.

8.  The device (1) according to any of the preceding claims, configured to generate a limit signal to the radar detector (17) indicating a rotation degree for the radar detector (17) such that the field of view of the radar detector (17) does not include the adjacent path, whereupon the radar detector (17) is arranged to rotate according to the rotation degree; or wherein the device (1) is configured to generate a limit signal to the radar detector (17) indicating a position of a hardware arranged to be positioned by the radar detector (17) such that the field of view of the radar detector (17) does not include the adjacent patch, whereupon the radar detector (17) is arranged to position the hardware according to the position.

9.  The device (1) according to any of the preceding claims, wherein the device (1) is configured to use a software detection algorithm on the data retrieved from the radar detector (17) that removes the adjacent path or any objects in the adjacent path from the data.

10. The device (1) according to any of the preceding claims, wherein the determination module (5) is configured to determine the indication based on data received via wireless communication describing that the certain vehicle (10) will leave the platoon (8), and/or from map data and position data wherein the determination module (5) is configured to determine that an off-ramp or similar is approaching in an adjacent path.

11. A system (12) for a platooning operation comprising a leaving determination module (5) configured to determine an indication that a certain vehicle (10) in a platoon (8) might leave the platoon (8) and drive into an adjacent path based on data indicating that the certain vehicle (10) might leave the platoon (8); wherein the platoon (8) includes at least one neighboring vehicle (9, 11) to the vehicle (10), wherein the system (12) further comprises

- a radar detector (17), arranged on the at least one neighboring vehicle (9, 11) and facing the certain vehicle (10);
- a device (1) that provided that an indication has been determined by the leaving determination module (5), is configured to limit a field of view of the radar detector (17), such that the adjacent path is not included in the field of view of the radar detector (17), the device (1) is further configured to receive data from the radar detector (17) and to determine from the data if the certain vehicle (10) has departed from the current path and thus left the platoon (8),
- a driving strategy module (6) configured to determine a driving strategy for the platoon (8), such that the platoon (8) is maintained when the certain vehicle (10) has left the platoon (8), wherein the determination of driving strategy is based on a vehicle characteristic for the at least one neighboring vehicle (9, 11) in the platoon (8) and/or an environmental characteristic, and to determine driving strategy data indicating the driving strategy; and
- a communication device (2) configured to receive the driving strategy data and to communicate the driving strategy to the at least one neighboring vehicle (9, 11) in the platoon (8).

12. The system (12) according to claim 11, wherein the device (1) is configured to generate a limit signal to the radar detector (17) indicating a rotation degree for the radar detector (17) such that the field of view of the radar detector (17) does not include the adjacent path, whereupon the radar detector (17) is arranged to rotate according to the rotation degree; or wherein the device (1) is configured to generate a limit signal to the radar detector (17) indicating a position of a hardware arranged to be positioned by the radar detector (17) such that the field of view of the radar detector (17) does not include the adjacent patch, whereupon the radar detector (17) is arranged to position the hardware according to the position.

13. The system (12) according to claim 11 or 12, wherein the device (1) is configured to use a software detection algorithm on the data retrieved from the radar detector (17) that removes the adjacent path or any objects in the adjacent path from the data.

14. The system (12) according to any of the claims 11 to 13, wherein the determination module (5) is configured to determine the indication based on data receive via wireless communication describing that the certain vehicle (10) will leave the platoon (8), and/or from map data and position data wherein the determination module (5) is configured to determine that an off-ramp or similar is approaching in an adjacent path.

15. A method for a platooning operation wherein the method comprising

- determining an indication that a certain vehicle (10) in a platoon (8) might leave the platoon (8) and drive into an adjacent path based on data indicating that the certain vehicle (10) might leave the platoon (8) wherein the platoon (8) includes at least one neighboring vehicle (9, 11) to the certain vehicle (10);
- provided an indication has been determined, limiting a field of view of a radar detector (17), arranged on the at least one neighboring vehicle (9, 11) and facing the certain vehicle (10), such that the adjacent path is not included in the field of view of the radar detector (17),
- determining from data received from the radar detector if the certain vehicle (10) has departed from the current path and thus left the platoon (8);
- determining a driving strategy for the platoon (8), such that the platoon (8) is maintained when the vehicle (10) has left the platoon (8), wherein the determination of strategy is based on a vehicle characteristic for at least one neighboring vehicle (9, 11) in the platoon (8) and/or an environmental characteristic.

16. A computer program P, wherein said computer program P comprises a computer program code to cause a device (1), or a computer connected to said device (1), to perform the method according to claim 15.

17. A computer program product comprising a computer program code stored on a computer-readable medium to perform the method according to claim 15, when said computer program code is executed by a device (1) or by a computer connected to said device (1).

**Patentansprüche**

1. Vorrichtung (1) für eine Operation in einer Kolonne, die ein Verlassen-Erfassungsmodul (5) umfasst, das dazu ausgebildet ist, einen Hinweis, dass ein bestimmtes Fahrzeug (10) in einer Kolonne (8) die Kolonne (8) verlassen und auf den danebenliegenden Fahrstreifen fahren könnte, anhand von Daten zu erfassen, die anzeigen, dass das bestimmte Fahrzeug (10) die Kolonne (8) verlassen könnte, wobei die Kolonne (8) wenigstens ein Nachbarfahrzeug (9, 11) des bestimmten Fahrzeugs (10) umfasst, wobei die Vorrichtung (1), sofern ein Hinweis erfasst wurde, dazu ausgebildet ist, ein Sichtfeld eines Radardetektors (17), der an dem wenigstens einen Nachbarfahrzeug (9, 11) angeordnet und dem bestimmten Fahrzeug (10) zugewandt ist, derart einzuschränken, dass der danebenliegende Fahrstreifen nicht in das Sichtfeld des Radardetektors (17) fällt, wobei die Vorrichtung (1) ferner dazu ausgebildet ist, Daten von dem Radardetektor (17) zu empfangen und aus den Daten zu ermitteln, ob das bestimmte Fahrzeug (10) den aktuellen Fahrstreifen und somit die Kolonne (8) verlassen hat, wobei die Vorrichtung (1) ferner ein Fahrstrategiemodul (6) umfasst, das dazu ausgebildet ist, eine Fahrstrategie für die Kolonne (8) zu ermitteln, sodass die Kolonne (8) beibehalten wird, wenn das bestimmte Fahrzeug (10) die Kolonne (8) verlassen hat, wobei das Ermitteln der Fahrstrategie auf einer Fahrzeugcharakteristik für wenigstens ein Nachbarfahrzeug (9, 11) in der Kolonne (8) und/oder einer Umgebungscharakteristik basiert, und Fahrstrategiedaten zu ermitteln, die die Fahrstrategie anzeigen.

2. Vorrichtung (1) nach Anspruch 1, die dazu ausgebildet ist, die Fahrstrategiedaten an eine Kommunikationsvorrichtung (2) in dem wenigstens einen Nachbarfahrzeug (9, 11) zu senden, wobei die Fahrstrategie zu dem wenigstens einen Nachbarfahrzeug (9, 11) kommuniziert wird.

3. Vorrichtung (1) nach Anspruch 1 oder 2, wobei das Fahrstrategiemodul (6) dazu ausgebildet ist, ein Optimierungsproblem derart zu lösen, dass ein Kraftstoffkriterium erfüllt wird und ein Zeitkriterium für das wenigstens eine Nachbarfahrzeug (9, 11) erfüllt wird.

4. Vorrichtung (1) nach Anspruch 3, wobei das Fahrstrategiemodul (6) dazu ausgebildet ist, das Optimierungsproblem mit wenigstens einer Bedingung zu lösen, bei der es sich um die Fahrzeugcharakteristik für das Nachbarfahrzeug (9, 11) und/oder die Umgebungscharakteristik handelt.

5. Vorrichtung (1) nach Anspruch 3 oder 4, wobei das Optimierungsproblem darin besteht, einen Abstand zwischen einem nachfolgenden Fahrzeug (9) und einem vorausfahrenden Fahrzeug des bestimmten Fahrzeugs (10) derart zu verringern, dass der Abstand ein Kolonnenfahrtkriterium für den Abstand erfüllt.

6. Vorrichtung (1) nach einem der vorangehenden Ansprüche, wobei es sich bei der Charakteristik des Nachbarfahrzeugs um eine Fahrzeugmasse, Motorleistung oder Aerodynamikdaten handelt.

7. Vorrichtung (1) nach einem der vorangehenden Ansprüche, wobei es sich bei der Umgebungscharakteristik um topographische Daten, Straßencharakteristik, Kurven im Straßenverlauf, Verkehrsdaten, Infrastrukturdaten, Wetterdaten handelt.

8. Vorrichtung (1) nach einem der vorangehenden Ansprüche, die zum Erzeugen eines Grenzsignals für den Radardetektor (17) ausgebildet ist, der einen Rotationsgrad für den Radardetektor (17) angibt, sodass das Sichtfeld des Radardetektors (17) nicht den danebenliegenden Fahrstreifen einschließt, wobei der Radardetektor (17) dazu eingerichtet ist, sich entsprechend dem Rotationsgrad zu drehen; oder wobei die Vorrichtung (1) zum Erzeugen eines Grenzsignals für den Radardetektor (17) ausgebildet ist, der eine Position einer Einrichtung angibt, die dazu angeordnet ist, von dem Radardetektor (17) derart positioniert zu werden, dass das Sichtfeld des Radardetektors (17) nicht den danebenliegenden Fahrstreifen einschließt, wobei der Radardetektor (17) dazu eingerichtet ist, die Einrichtung entsprechend der Position zu positionieren.

9. Vorrichtung (1) nach einem der vorangehenden Ansprüche, wobei die Vorrichtung (1) dazu ausgebildet ist, einen Software-Erkennungsalgorithmus auf die vom Radardetektor (17) abgerufenen Daten anzuwenden, der den danebenliegenden Fahrstreifen oder jegliche Objekte in dem danebenliegenden Fahrstreifen aus den Daten entfernt.

10. Vorrichtung (1) nach einem der vorangehenden Ansprüche, wobei das Erfassungsmodul (5) zum Erfassen des Hinweises anhand von über drahtlose Kommunikation empfangenen Daten, die beschreiben, dass das bestimmte Fahrzeug (10) die Kolonne (8) verlassen wird, und/oder aus Kartendaten und Positionsdaten ausgebildet ist, wobei das Erfassungsmodul (5) dazu ausgebildet ist, zu erfassen, dass eine Ausfahrt oder Ähnliches in dem danebenliegenden Fahrstreifen näher kommt.

11. System (12) für eine Operation in einer Kolonne, das ein Verlassen-Erfassungsmodul (5) umfasst, das dazu ausgebildet ist, einen Hinweis, dass ein bestimmtes Fahrzeug (10) in einer Kolonne (8) die Kolonne (8) verlassen und auf den danebenliegenden Fahrstreifen fahren könnte, anhand von Daten zu erfassen, die anzeigen, dass das bestimmte Fahrzeug (10) die Kolonne (8) verlassen könnte, wobei die Kolonne (8) wenigstens ein Nachbarfahrzeug (9, 11) des bestimmten Fahrzeugs (10) umfasst, wobei das System (12) ferner umfasst:

- einen Radardetektor (17), der an dem wenigstens einen Nachbarfahrzeug (9, 11) angeordnet und dem bestimmten Fahrzeug (10) zugewandt ist;
- Vorrichtung (1), die dazu ausgebildet ist, sofern ein Hinweis von dem Verlassen-Erfassungsmodul (5) erfasst wurde, ein Sichtfeld des Radardetektors (17) derart einzuschränken, dass der danebenliegende Fahrstreifen nicht in das Sichtfeld des Radardetektors (17) fällt, wobei die Vorrichtung (1) ferner dazu ausgebildet ist, Daten von dem Radardetektor (17) zu empfangen und aus den Daten zu ermitteln, ob das bestimmte Fahrzeug (10) den aktuellen Fahrstreifen und somit die Kolonne (8) verlassen hat;
- ein Fahrstrategiemodul (6), das dazu ausgebildet ist, eine Fahrstrategie für die Kolonne (8) zu ermitteln, sodass die Kolonne (8) beibehalten wird, wenn das bestimmte Fahrzeug (10) die Kolonne (8) verlassen hat, wobei das Ermitteln der Fahrstrategie auf einer Fahrzeugcharakteristik für das wenigstens eine Nachbarfahrzeug (9, 11) in der Kolonne (8) und/oder einer Umgebungscharakteristik basiert, und Fahrstrategiedaten zu ermitteln, die die Fahrstrategie anzeigen; und
- eine Kommunikationsvorrichtung (2), die dazu ausgebildet ist, die Fahrstrategiedaten zu empfangen und die Fahrstrategie an das wenigstens eine Nachbarfahrzeug (9, 11) in der Kolonne (8) zu übertragen.

12. System (12) nach Anspruch 11, wobei die Vorrichtung (1) zum Erzeugen eines Grenzsignals für den Radardetektor (17) ausgebildet ist, der einen Rotationsgrad für den Radardetektor (17) angibt, sodass das Sichtfeld des Radardetektors (17) nicht den danebenliegenden Fahrstreifen einschließt, wobei der Radardetektor (17) dazu eingerichtet ist, sich entsprechend dem Rotationsgrad zu drehen; oder wobei die Vorrichtung (1) zum Erzeugen eines Grenzsignals für den Radardetektor (17) ausgebildet ist, der eine Position einer Hardware angibt, die dazu eingerichtet ist, von dem Radardetektor (17) derart positioniert zu werden, dass das Sichtfeld des Radardetektors (17) nicht den danebenliegenden Fahrstreifen einschließt, wobei der Radardetektor (17) dazu eingerichtet ist, die Hardware entsprechend der Position zu positionieren.

13. System (12) nach Anspruch 11 oder 12, wobei die Vorrichtung (1) dazu ausgebildet ist, einen Software-Erkennungsalgorithmus auf die vom Radardetektor (17) abgerufenen Daten anzuwenden, der den danebenliegenden Fahrstreifen oder jegliche Objekte in dem danebenliegenden Fahrstreifen aus den Daten entfernt.

14. System (12) nach einem der Ansprüche 11 bis 13, wobei das Erfassungsmodul (5) zum Erfassen des Hinweises anhand von über drahtlose Kommunikation empfangenen Daten, die beschreiben, dass das bestimmte Fahrzeug (10) die Kolonne (8) verlassen wird, und/oder aus Kartendaten und Positionsdaten ausgebildet ist, wobei das Erfassungsmodul (5) dazu ausgebildet ist, zu erfassen, dass eine Ausfahrt oder Ähnliches in dem danebenliegenden Fahrstreifen näher kommt.

15. Verfahren für eine Operation in einer Kolonne, wobei das Verfahren umfasst:

- Erfassen eines Hinweises, dass ein bestimmtes Fahrzeug (10) in einer Kolonne (8) die Kolonne (8) verlassen und auf den danebenliegenden Fahrstreifen fahren könnte, anhand von Daten, die anzeigen, dass das bestimmte Fahrzeug (10) die Kolonne (8) verlassen könnte, wobei die Kolonne (8) wenigstens ein Nachbarfahrzeug (9, 11) des bestimmten Fahrzeugs (10) umfasst,
- sofern ein Hinweis erfasst wurde, Einschränken eines Sichtfelds eines Radardetektors (17), der an dem wenigstens einen Nachbarfahrzeug (9, 11) angeordnet und dem bestimmten Fahrzeug (10) zugewandt ist, derart, dass der danebenliegende Fahrstreifen nicht in das Sichtfeld des Radardetektors (17) fällt,
- Ermitteln aus den vom Radardetektor empfangenen Daten, ob das bestimmte Fahrzeug (10) den aktuellen Fahrstreifen und somit die Kolonne (8) verlassen hat;
- Ermitteln einer Fahrstrategie für die Kolonne (8), sodass die Kolonne (8) beibehalten wird, wenn das bestimmte Fahrzeug (10) die Kolonne (8) verlassen hat, wobei das Ermitteln der Strategie auf einer Fahrzeugcharakteristik für wenigstens ein Nachbarfahrzeug (9, 11) in der Kolonne (8) und/oder einer Umgebungscharakteristik basiert.

16. Computerprogramm P, wobei das Computerprogramm P einen Computerprogrammcode umfasst, der eine Vorrichtung (1) oder einen mit der Vorrichtung (1) verbundenen Computer dazu veranlasst, das Verfahren nach Anspruch 15 auszuführen.

17. Computerprogrammprodukt, das einen Computerprogrammcode umfasst, der auf einem computerlesbaren Medium gespeichert ist, um das Verfahren nach Anspruch 15 auszuführen, wenn der Computerprogrammcode von einer Vorrichtung (1) oder einem mit der Vorrichtung (1) verbundenen Computer ausgeführt wird.

**Revendications**

1. Dispositif (1) destiné à une opération de circulation en peloton comprenant un module de détermination de sortie (5) configuré pour déterminer une indication qu'un certain véhicule (10) dans un peloton (8) pourrait sortir du peloton (8) et entrer dans une voie adjacente sur la base de données indiquant que le certain véhicule (10) pourrait quitter le peloton (8), dans lequel le peloton (8) comporte au moins un véhicule voisin (9, 11) au certain véhicule (10), dans lequel, si une indication a été déterminée, le dispositif (1) est configuré pour limiter un champ de vision d'un détecteur radar (17), agencé sur l'au moins un véhicule voisin (9, 11) et faisant face au certain véhicule (10), de sorte que la voie adjacente n'est pas incluse dans le champ de vision du détecteur radar (17), le dispositif (1) est en outre configuré pour recevoir des données provenant du détecteur radar (17) et pour déterminer à partir des données si le certain véhicule (10) s'est écarté de la voie actuelle et est ainsi sorti du peloton (8), le dispositif (1) comprend en outre un module de stratégie de conduite (6) configuré pour déterminer une stratégie de conduite pour le peloton (8), de sorte que le peloton (8) est maintenu lorsque le certain véhicule (10) est sorti du peloton (8), dans lequel la détermination de stratégie de conduite est basée sur une caractéristique de véhicule pour au moins un véhicule voisin (9, 11) dans le peloton (8) et/ou une caractéristique environnementale, et pour déterminer des données de stratégie de conduite indiquant la stratégie de conduite.

2. Dispositif (1) selon la revendication 1, configuré pour envoyer les données de stratégie de conduite à un dispositif de communication (2) dans l'au moins un véhicule voisin (9, 11), moyennant quoi la stratégie de conduite est communiquée à l'au moins un véhicule voisin (9, 11).

3. Dispositif (1) selon la revendication 1 ou 2, dans lequel le module de stratégie de conduite (6) est configuré pour résoudre un problème d'optimisation de telle sorte qu'un critère de carburant soit satisfait et qu'un critère de temps pour l'au moins un véhicule voisin (9, 11) soit satisfait.

4. Dispositif (1) selon la revendication 3, dans lequel le module de stratégie de conduite (6) est configuré pour résoudre le problème d'optimisation avec au moins une contrainte étant l'une quelconque des caractéristiques de véhicule pour le véhicule voisin (9, 11) et/ou une caractéristique environnementale.

5. Dispositif (1) selon la revendication 3 ou 4, dans lequel le problème d'optimisation comporte la réduction d'une distance entre un véhicule suivant (9) et un véhicule précédent du certain véhicule (10) de sorte que la distance respecte un critère de circulation en peloton pour la distance.

6. Dispositif (1) selon l'une quelconque des revendications précédentes, dans lequel la caractéristique de véhicule voisine est l'une quelconque d'une masse de véhicule, d'une puissance de moteur ou de données aérodynamiques.

7. Dispositif (1) selon l'une quelconque des revendications précédentes, dans lequel la caractéristique environnementale est l'une quelconque parmi des données topographiques, une caractéristique de route, une courbure de route, des données de trafic, des données d'infrastructure, des données météorologiques.

8. Dispositif (1) selon l'une quelconque des revendications précédentes, configuré pour générer un signal de limite vers le détecteur radar (17) indiquant un degré de rotation pour le détecteur radar (17) de telle sorte que le champ de vision du détecteur radar (17) n'inclut pas la voie adjacente, après quoi le détecteur radar (17) est agencé pour tourner selon le degré de rotation ; ou dans lequel le dispositif (1) est configuré pour générer un signal de limite vers le détecteur radar (17) indiquant une position d'un matériel agencé pour être positionné par le détecteur radar (17) de telle sorte que le champ de vision du détecteur radar (17) n'inclut pas la voie adjacente, après quoi le détecteur radar (17) est agencé pour positionner le matériel selon la position.

9. Dispositif (1) selon l'une quelconque des revendications précédentes, dans lequel le dispositif (1) est configuré pour utiliser un algorithme de détection logiciel sur les données récupérées à partir du détecteur radar (17) qui retire des données la voie adjacente ou tout objet dans la voie adjacente.

**10.** Dispositif (1) selon l'une quelconque des revendications précédentes, dans lequel le module de détermination (5) est configuré pour déterminer l'indication sur la base de données reçues par l'intermédiaire d'une communication sans fil décrivant que le certain véhicule (10) sortira du peloton (8), et/ou à partir de données cartographiques et de données de position, dans lequel le module de détermination (5) est configuré pour déterminer qu'une bretelle de sortie ou analogue s'approche dans une voie adjacente.

**11.** Système (12) destiné à une opération de circulation en peloton comprenant un module de détermination de sortie (5) configuré pour déterminer une indication qu'un certain véhicule (10) dans un peloton (8) pourrait sortir du peloton (8) et entrer dans une voie adjacente sur la base de données indiquant que le certain véhicule (10) pourrait sortir du peloton (8) ; dans lequel le peloton (8) comporte au moins un véhicule voisin (9, 11) par rapport au véhicule (10), dans lequel le système (12) comprend en outre

  - un détecteur radar (17), agencé sur l'au moins un véhicule voisin (9, 11) et faisant face au certain véhicule (10) ;
  - un dispositif (1) qui, si une indication a été déterminée par le module de détermination de sortie (5), est configuré pour limiter un champ de vision du détecteur radar (17), de sorte que la voie adjacente n'est pas incluse dans le champ de vision du détecteur radar (17), le dispositif (1) est en outre configuré pour recevoir des données en provenance du détecteur radar (17) et pour déterminer à partir des données si le certain véhicule (10) s'est écarté de la voie actuelle et est ainsi sorti du peloton (8),
  - un module de stratégie de conduite (6) configuré pour déterminer une stratégie de conduite pour le peloton (8), de sorte que le peloton (8) est maintenu lorsque le certain véhicule (10) est sorti du peloton (8), dans lequel la détermination de stratégie de conduite est basée sur une caractéristique de véhicule pour l'au moins un véhicule voisin (9, 11) dans le peloton (8) et/ou une caractéristique environnementale, et pour déterminer des données de stratégie de conduite indiquant la stratégie de conduite ; et
  - un dispositif de communication (2) configuré pour recevoir les données de stratégie de conduite et pour communiquer la stratégie de conduite au l'au moins un véhicule voisin (9, 11) dans le peloton (8).

**12.** Système (12) selon la revendication 11, dans lequel le dispositif (1) est configuré pour générer un signal de limite vers le détecteur radar (17) indiquant un degré de rotation pour le détecteur radar (17) de telle sorte que le champ de vision du détecteur radar (17) n'inclut pas la voie adjacente, après quoi le détecteur radar (17) est agencé pour tourner selon le degré de rotation ; ou dans lequel le dispositif (1) est configuré pour générer un signal de limite vers le détecteur radar (17) indiquant une position d'un matériel agencé pour être positionné par le détecteur radar (17) de telle sorte que le champ de vision du détecteur radar (17) n'inclut pas la voie adjacente, après quoi le détecteur radar (17) est agencé pour positionner le matériel selon la position.

**13.** Système (12) selon la revendication 11 ou 12, dans lequel le dispositif (1) est configuré pour utiliser un algorithme de détection logiciel sur les données récupérées à partir du détecteur radar (17) qui retire des données la voie adjacente ou tout objet dans la voie adjacente.

**14.** Système (12) selon l'une quelconque des revendications 11 à 13, dans lequel le module de détermination (5) est configuré pour déterminer l'indication sur la base de données reçues par l'intermédiaire d'une communication sans fil décrivant que le certain véhicule (10) sortira du peloton (8), et/ou à partir de données cartographiques et de données de position, dans lequel le module de détermination (5) est configuré pour déterminer qu'une bretelle de sortie ou analogue s'approche dans une voie adjacente.

**15.** Procédé destiné à une opération de circulation en peloton dans lequel le procédé comprend

  - la détermination d'une indication qu'un certain véhicule (10) dans un peloton (8) pourrait sortir du peloton (8) et entrer dans une trajectoire adjacente sur la base de données indiquant que le certain véhicule (10) pourrait sortir du peloton (8), dans lequel le peloton (8) comporte au moins un véhicule voisin (9, 11) par rapport au certain véhicule (10) ;
  - si une indication a été déterminée, la limitation d'un champ de vision d'un détecteur radar (17), agencé sur l'au moins un véhicule voisin (9, 11) et faisant face au certain véhicule (10), de sorte que la trajectoire adjacente ne soit pas incluse dans le champ de vision du détecteur radar (17),
  - le fait de déterminer, à partir des données reçues en provenance du détecteur radar, si le certain véhicule (10) s'est écarté de la trajectoire actuelle et est ainsi sorti du peloton (8) ;
  - la détermination d'une stratégie de conduite pour le peloton (8), de sorte que le peloton (8) est maintenu lorsque le véhicule (10) est sorti du peloton (8), dans lequel la détermination de stratégie est basée sur une caractéristique de véhicule pour au moins un véhicule voisin (9, 11) dans le peloton (8) et/ou une caractéristique environnementale.

16. Programme d'ordinateur P, dans lequel ledit programme d'ordinateur P comprend un code de programme d'ordinateur pour amener un dispositif (1), ou un ordinateur connecté audit dispositif (1), à réaliser le procédé selon la revendication 15.

17. Produit programme d'ordinateur comprenant un code de programme d'ordinateur stocké sur un support lisible par ordinateur pour réaliser le procédé selon la revendication 15, lorsque ledit code de programme d'ordinateur est exécuté par un dispositif (1) ou par un ordinateur connecté audit dispositif (1).

FIG. 1

FIG. 2

FIG. 3A

FIG. 3B

FIG. 3C

FIG. 3D

A1 — DETERMINING AN INDICATION THAT A VEHICLE MIGHT LEAVE THE PLATOON

A2 — LIMITING A FIELD OF VIEW OF A RADAR DETECTOR

A3 — DETERMINING FROM DATA OF THE RADAR DETECTOR THAT THE VEHICLE HAS LEFT THE PLATOON

A4 — DETERMINING A DRIVING STRATEGY FOR THE PLATOON SUCH THAT THE PLATOON MAY BE MAINTAINED WHEN THE VEHICLE THAT MIGHT LEAVE THE PLATOON HAS LEFT THE PLATOON

FIG. 4

**EP 3 294 599 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8131444 B2
- EP 0762364 A2